# EUROPÄISCHE PATENTSCHRIFT

(11) **EP 0 890 301 B1**
(45) Veröffentlichungstag und Bekanntmachung des Hinweises auf die Patenterteilung: **19.03.2003**
(21) Anmeldenummer: 98110872.3
(22) Anmeldetag: 15.06.1998
(51) Int. Cl.: A01D 41/00, A01D 41/14

(54) **Schwenkrahmen eines Erntevorsatzgerätes an landwirtschaftlichen Arbeitsmaschinen zum Aufnehmen und Weiterleiten von Erntegut**
Pivoting frame of a harvester head on agricultural machines for feeding and conveying crops
Châssis pivotant d'une tête de récolte de machines agricoles pour ramasser et convoyer des céréales

(30) Priorität: 17.06.1997 DE 19725530
(43) Veröffentlichungstag der Anmeldung: 13.01.1999
(73) Patentinhaber: CLAAS Saulgau GmbH, 88340 Bad Saulgau (DE)
(72) Erfinder: Lacher, Hans Peter, 72488 Sigmaringen (DE)

(56) Entgegenhaltungen:
- EP-A- 0 534 199
- DE-A- 2 026 190
- FR-A- 1 455 702
- FR-A- 2 315 212

## Beschreibung

Die Erfindung bezieht sich auf den Schwenkrahmen eines Erntevorsatzgerätes an landwirtschaftlichen Arbeitsmaschinen gemäß dem Oberbegriff des Patentanspruchs 1.

Solch ein Schwenkrahmen ist aus dem Dokument FR 1 455 212 bekannt.

Derartige Erntevorsatzgeräte werden heute vorrangig an selbstfahrende Mähdrescher oder Häcksler adaptiert. Ständig steigende Erträge haben zu immer höheren Durchsatzleistungen dieser landwirtschaftlichen Arbeitsmaschinen geführt, die u.a. durch Erntevorsatzgeräte erreicht werden, deren Arbeitsbreite weit über der zulässigen Transportbreite liegt. Für den Straßentransport sind Erntevorsatzgeräte dieser Art entweder von der Trägermaschine abzubauen oder an ihr durch geeignete Schwenk-, Schiebe- oder Klappmechanismen in ihrer Lage so zu verändern, daß zulässige Transportabmessungen nicht überschritten werden.

Für landwirtschaftliche Arbeitsmaschinen, insbesondere Mähdrescher oder Häcksler, sind mehrteilige Erntevorsatzgeräte bekannt, die durch Schwenk-, Klapp- und Schubbewegungen ihre äußeren Abmessungen auf eine zulässige Transportbreite verringern können. Dabei werden die äußeren Segmente der Erntevorsatzgeräte so über einem fixen (DE 40 02 344) oder verschiebbaren (DE 38 42 400) Mittelbereich angeordnet, daß in Transportstellung ein Weiterarbeiten mit verringerter Breite des Erntevorsatzgerätes nicht möglich ist. Zudem wird der Schwerpunkt des Erntevorsatzgerätes teilweise von der Trägermaschine weg nach vorn verlagert, so daß die an der Trägermaschine angebrachten Aufnahmen des Erntevorsatzgerätes höheren mechanischen Belastungen und damit verstärktem Verschleiß ausgesetzt sind.

An Heu- und Mähmaschinen, die nicht unter den Gattungsbegriff des Anspruchs 1 fallen, sind hingegen mehrteilig ausgeführte Mäh- oder Rechwerke bekannt, deren äußere Segmente um eine in Maschinenlängsrichtung verlaufende Drehachse geschwenkt werden können (DE 41 03 011, USP 4 048 790) und die damit nicht zu einer die Belastung der Aufnahmen des Erntevorsatzgerätes an der Trägermaschine negativ beeinflussenden Verlagerung des Erntevorsatzschwerpunktes führen. Derartiger Mäh- oder Rechwerke können auch mit angestellten Seitenteilen im Bereich des feststehenden Mittelteils Erntegut mähen und ablegen. Aufgrund ihres funktionsbedingten Aufbaus sind definierte Förderungen eines Erntegutstromes zur Überwindung von Niveauunterschieden wie dies am Häcksler oder Mähdrescher auftritt nicht möglich.

Der Erfindung liegt deshalb die Aufgabe zugrunde, den Schwenkrahmen eines Erntevorsatzgerätes gemäß dem Gattungsbegriff des Anspruchs 1 so zu gestalten, daß auch bei großen Arbeitsbreiten die zulässigen Transportbreiten nicht überschritten werden, die Funktionsfähigkeit des Erntevorsatzes auch bei angeklappten Seitenteilen in seinem Mittelbereich gewährleistet ist und die Transportstellung eine günstige Schwerpunktlage des Erntevorsatzes aufweist.

Erfindungsgemäß wird die Aufgabe durch einen Schwenkrahmen eines Erntevorsatzgerätes mit den kennzeichnenden Merkmalen des Anspruchs 1 gelöst. Eine solche Ausgestaltung des Schwenkrahmens ermöglicht hohe Arbeitsbreiten, hält in Transportstellung die zulässigen äußeren Abmessungen ein und gewährleistet, daß auch bei eingeschwenkten Seitenteilen der Mittelbereich des Erntevorsatzgerätes weiterhin Erntegut aufnehmen und weiterleiten kann.

Vorteilhafte Ausgestaltungen sind Gegenstand der Unteransprüche und werden nachfolgend anhand eines in einer Zeichnung dargestellten Ausführungsbeispiels näher erläutert und beschrieben.

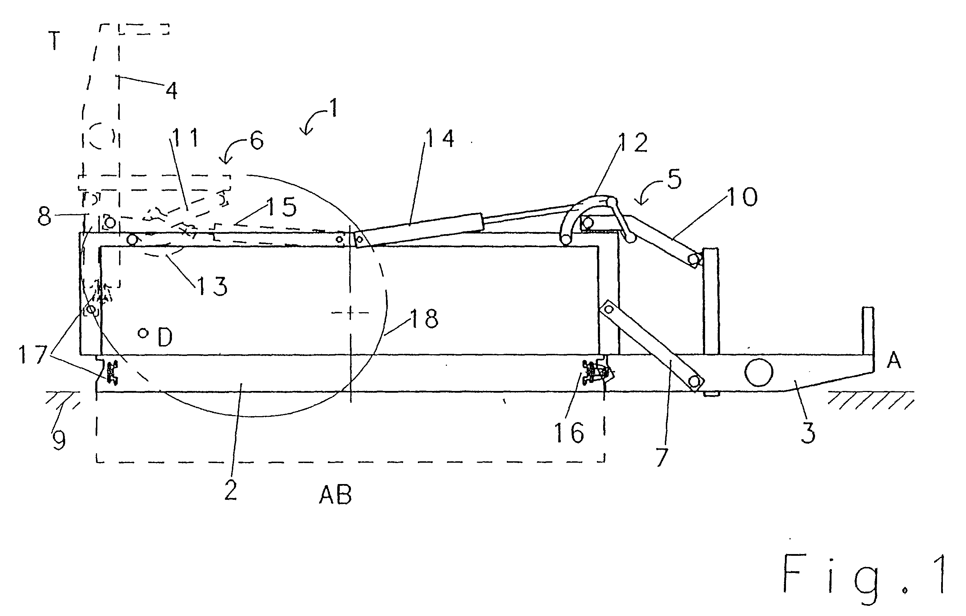

Es zeigt
- Figur 1: den Schwenkrahmen eines Erntevorsatzgerätes für landwirtschaftliche Arbeitsmaschinen in der Vorderansicht, wobei linksseitig die Transportstellung gestrichelt und rechtsseitig die Arbeitsstellung ausgezogen dargestellt ist.

In Figur 1 ist ein erfindungsgemäßer Schwenkrahmen 1 eines Erntevorsatzgerätes dargestellt, wobei die das Erntegut aufnehmenden und weiterleitenden Arbeitsorgane des Erntevorsatzgerätes und die landwirtschaftliche Arbeitsmaschine, an welche dieses Erntevorsatzgerät adaptiert werden kann, nicht näher beschrieben sind. Der Schwenkrahmen 1 besteht aus einem über nicht näher dargestellte Arretiermechanismen an der landwirtschaftlichen Arbeitsmaschine fixierten Mittelteil 2 und schwenkbar an diesem angebrachten Seitenteilen 3,4. Jedes der Seitenteile 3,4 ist über eine Schwenkvorrichtung 5,6 gelenkgig mit dem Mittelteil 2 des Schwenkrahmens 1 verbunden. Die Koppelung der Seitenteile 3,4 an den Mittelteil 2 erfolgt über ansich bekannte Viergelenkmechanismen, deren näher an der Arbeitsfläche 9 liegenden Koppeln 7,8 einenends drehbar im unteren Bereich der Seitenteile 3,4 und anderenends drehbar etwa mittig an den vertikal verlaufenden seitlichen Versteifungen des Mittelteils 2 angelenkt sind. Die oberen Koppeln 10,11 sind ebenfalls drehbar, jedoch oberhalb der Koppeln 7,8 an den Seitenteilen 3,4 und oberhalb des Mittelteil 2 in einem äußeren Bereich an diesem angelenkt.

Damit die Seitenteile 3,4 von einer Arbeitsstellung A in eine Transportstellung T oder umgekehrt bewegt werden können, werden die oberen Koppeln 10,11 der Viergelenkmechanismen über je eine zweigliedrige Koppel 12,13 und je einen Hydraulikzylinder 14,15 angetrieben. Die zweigliedrigen Koppeln 12,13 und die aus oberen und unteren Koppeln 7,8,10,11 bestehenden Viergelenkmechanismen sind in ihrer Form und Lage so aufeinander abgestimmt, daß die Schwenkvorrichtungen 5,6 und die Seitenteile 3,4 stets außerhalb des Arbeitsbereichs AB des Mittelteils Schwenkbewegungen ausführen. Auf diese Weise kann der Mittelteil 2 weiter Erntegut aufnehmen und transportieren während die Seitenteile 3,4 von der Arbeitsstellung A in die Transportstellung T und umgekehrt geschwenkt werden oder diese in der Transportstellung verharren. Die zweigliedrigen Koppeln 12,13 sind in vorteilhafter Weise so ausgeführt, daß bereits ein kleiner Hub der Hydraulikzylinder einen annähernd 180° betragenden Schwenkwinkel der oberen Koppeln 10,11 ermöglicht, die nachlaufenden unteren Koppeln 7,8 dabei nicht in den Arbeitsbereich des Mittelteils 2 hineinragen und die Seitenteile 3,4 trotzdem einen mindestens 90° betragenden Schwenkbereich durchlaufen, dessen ideelle Drehachse D verschiedene Lagen innerhalb des Arbeitsbereichs AB des Mittelteils 2 einnimmt, wobei in Figur 1 neben der Kurvenbahn 18 nur die Lage der ideellen Drehachse in Transportstellung T dargestellt ist.

Die starre Koppelung zwischen dem Mittelteil 2 und den Seitenteilen 3,4 zur Übertragung der Antriebsenergie erfolgt über mechanische, nicht näher dargestellte Kupplungen 16,17, die selbsttätig ein- und auskuppeln.

Die Hydraulikzylinder 14,15 sind unabhängig voneinander ansteuerbar, so daß die Seitenteile 3,4 ebenfalls unabhängig voneinander geschwenkt werden können. Dadurch wird erreicht, daß der erfindungsgemäße Schwenkrahmen 1 eine große Gesamtarbeitsbreite und ohne Umbauarbeiten Teilarbeitsbreiten zuläßt, die durch links- oder rechtsseitiges Anheben des jeweiligen Seitenteils 3,4 oder durch gleichzeitiges Anheben beider Seitenteile 3,4 ermöglicht werden.

Damit ist dem Fachmann eine Anleitung gegeben, den erfindungsgemäßen Schwenkrahmen 1 in gleicher oder abgewandelter Form an den beschriebenen landwirtschaftlichen Arbeitsmaschinen oder anders gearteten Grund- oder Adaptiergeräten einzusetzen um die beschriebenen Effekte zu erzielen.

### Bezugszeichenliste

- 1: Schwenkrahmen eines Erntevorsatzgerätes
- 2: Mittelteil
- 3,4: Seitenteil
- 5,6: Schwenkvorrichtung
- 7,8: untere Koppel
- 9: Arbeitsfläche
- 10,11: obere Koppel
- 12,13: zweigliedrige Koppel
- 14,15: Hydraulikzylinder
- 16,17: Kupplung
- 18: Kurvenbahn der ideellen Drehachse

- A: Arbeitsstellung
- AB: Arbeitsbereich
- D: Lage der idellen Drehachse
- T: Transportstellung

## Patentansprüche

1. Schwenkrahmen eines Erntevorsatzgerätes für landwirtschaftliche Arbeitsmaschinen zum Aufnehmen und Weiterleiten von Erntegut, bestehend aus einem an einer landwirtschaftlichen Arbeitsmaschine fixierten Mittelteil und um in Fahrtrichtung weisende Schwenkachsen beidseitig am Mittelteil angebrachten, mittels Schwenkvorrichtung von einer starr mit dem Mittelteil verbundenen Arbeitsstellung in eine annähernd senkrecht dazu angeordnete Transportstellung nach innen und oben schwenkbaren Seitenteilen,
**dadurch gekennzeichnet,**
**daß** die Schwenkvorrichtungen (5,6) die schwenkbaren Seitenteile (3,4) außerhalb des Arbeitsbereichs des Mittelteils (2) um eine im Arbeitsbereich des Mittelteils (2) liegende ideelle Drehachsen D von der Arbeits- in die Transportstellung bewegen.

2. Schwenkrahmen eines Erntevorsatzgerätes nach Anspruch 1,
**dadurch gekennzeichnet,**
**daß** die Seitenteile (3,4) unabhängig voneinander von der Transport- in die Arbeitsstellung oder umgekehrt schwenkbar sind.

3. Schwenkrahmen eines Erntevorsatzgerätes nach Anspruch 1,
**dadurch gekennzeichnet,**
**daß** jede Schwenkvorrichtung (5,6) eine Kombination aus ansich bekannten mechanischen Koppelgliedern (7,8,10,11,12,13) und je einem Hydraulikzylinder (14,15) als Antrieb sind, die während ihrer Bewegung nur einen Bereich seitlich und oberhalb des feststehenden Mittelteils (2) überstreichen.

4. Schwenkrahmen eines Erntevorsatzgerätes nach Anspruch 1 bis 3,
**dadurch gekennzeichnet,**
**daß** die im Bereich des feststehenden Mittelteils (2) angeordneten unteren Koppelglieder (7,8) der Schwenkvorrichtungen (5,6) in Transportstellung des Schwenkrahmens (1) eine Position einnehmen, die innerhalb der vertikalen Begrenzung des Mittelteils (2) liegt.

5. Schwenkrahmen eines Erntevorsatzgerätes nach Anspruch 1 bis3,
**dadurch gekennzeichnet,**
**daß** die im Bereich des feststehenden Mittelteils (2) angeordneten oberen Koppelglieder (10,11) der Schwenkvorrichtungen (5,6) in Transportstellung des Schwenkrahmens (1) eine Position einnehmen, die oberhalb des Arbeitsbereichs des feststehenden Mittelteils (2) liegt.

6. Schwenkrahmen eines Erntevorsatzgerätes nach Anspruch 5,
**dadurch gekennzeichnet,**
**daß** die zweigliedrigen Koppeln (12,13) die Schwenkbewegung der im Bereich des feststehenden Mittelteils (2) angeordneten oberen Koppelglieder (10,11) durch einen geringen Hub des jeweiligen Hydraulikzylinders (14,15) ermöglichen.

## Claims

1. A pivotal frame of a front-mounted harvesting attachment for agricultural working machines for picking up and passing along crop material, comprising a central portion fixed to an agricultural working machine and side portions which are mounted at both sides to the central portion about pivot axes facing in the direction of travel and which are pivotable inwardly and upwardly by means of a pivoting device from a working position of being rigidly connected to the central portion into a transport position arranged approximately perpendicularly thereto, **characterised in that** the pivoting devices (5, 6) move the pivotable side portions (3, 4) outside the working region of the central portion (2) from the working position into the transport position about an ideal axis of rotation D which is in the working region of the central portion (2).

2. A pivotal frame of a front-mounted harvesting attachment according to claim 1 **characterised in that** the side portions (3, 4) are pivotable independently of each other from the transport into the working position or vice-versa.

3. A pivotal frame of a front-mounted harvesting attachment according to claim 1 **characterised in that** each pivoting device (5, 6) is a combination of per se known mechanical coupling members (7, 8, 10, 11, 12, 13) and a respective hydraulic cylinder (14, 15) as a drive, which during their movement cover only a region laterally of and above the stationary central portion (2).

4. A pivotal frame of a front-mounted harvesting attachment according to claims 1 to 3 **characterised in that** the lower coupling members (7, 8) of the pivoting devices (5, 6), which coupling members are arranged in the region of the stationary central portion (2), assume in the transport position of the pivotal frame (1) a position which lies within the vertical boundary of the central portion (2).

5. A pivotal frame of a front-mounted harvesting attachment according to claims 1 to 3 **characterised in that** the upper coupling members (10, 11) of the pivoting devices (5, 6), which coupling members are arranged in the region of the stationary central portion (2), assume in the transport position of the pivotal frame (1) a position which lies above the working region of the stationary central portion (2).

6. A pivotal frame of a front-mounted harvesting attachment according to claim 5 **characterised in that** the two-member coupling means (12, 13) permit the pivotal movement of the upper coupling members (10, 11) arranged in the region of the stationary central portion (2), by virtue of a slight stroke movement of the respective hydraulic cylinder (14, 15).

## Revendications

1. Châssis pivotant d'un outil frontal de récolte pour machines de travail agricoles, pour ramasser et transporter le produit récolté, comprenant un élément médian fixé à une machine de travail agricole et des éléments latéraux, qui sont montés sur l'élément médian, de chaque côté de celui-ci, et peuvent être amenés par un dispositif de pivotement, par pivotement en direction de l'intérieur et vers le haut autour d'axes de pivotement orientés dans la direction de déplacement, d'une position de travail, dans laquelle ils sont liés rigidement à l'élément médian, dans une position de transport sensiblement perpendiculaire à celle-ci, **caractérisé en ce que** les dispositifs de pivotement (5, 6) déplacent les éléments latéraux pivotants (3, 4) de la position de travail dans la position de transport, à l'extérieur de la zone de travail de l'élément médian (2), autour d'axes de rotation idéaux (D) situés dans la zone de travail de l'élément médian (2).

2. Châssis pivotant d'un outil frontal selon la revendication 1, **caractérisé en ce que** les éléments latéraux (3, 4) peuvent pivoter indépendamment l'un de l'autre de la position de transport dans la position de travail et inversement.

3. Châssis pivotant d'un outil frontal selon la revendication 1, **caractérisé en ce que** chaque dispositif de pivotement (5, 6) est une combinaison d'organes de couplage (7, 8, 10, 11, 12, 13) connus et d'un vérin hydraulique (14, 15) comme moyen d'entraînement, qui, au cours de leur déplacement, ne balaient qu'une zone sur le côté et au-dessus de l'élément médian (2) fixe.

4. Châssis pivotant d'un outil frontal selon revendications 1 à 3, **caractérisé en ce que** les organes de couplage inférieurs (7, 8) des dispositifs de pivotement (5, 6), disposés dans la région de l'élément médian (2) fixe, dans la position de transport du châssis pivotant (1), prennent une position qui se situe à l'intérieur des limites verticales de l'élément médian (2).

5. Châssis pivotant d'un outil frontal selon revendications 1 à 3, **caractérisé en ce que** les organes de couplage supérieurs (10, 11) des dispositifs de pivotement (5, 6), disposés dans la région de l'élément médian (2) fixe, dans la position de transport du châssis pivotant (1), prennent une position qui est située au-dessus de la zone de travail de l'élément médian (2).

6. Châssis pivotant d'un outil frontal selon la revendication 5, **caractérisé en ce que** les coupleurs (12, 13) en deux parties permettent le pivotement des organes de couplage supérieurs (10, 11) disposés dans la région de l'élément médian (2) fixe, avec une faible course de vérin hydraulique (14, 15) concerné.
